# EUROPÄISCHE PATENTSCHRIFT

(11) **EP 0 728 604 B1**
(45) Veröffentlichungstag und Bekanntmachung des Hinweises auf die Patenterteilung: **01.04.1998**
(21) Anmeldenummer: 96100064.3
(22) Anmeldetag: 04.01.1996
(51) Int. Cl.: B60G 17/015, B60G 17/052

(54) **Fahrzeug mit pneumatisch gefederter Doppelachse**
Vehicle with pneumatically spring tandem axle
Véhicule avec essieu en tandem à suspension pneumatique

(30) Priorität: 21.02.1995 DE 19505977
(43) Veröffentlichungstag der Anmeldung: 28.08.1996
(73) Patentinhaber: DAIMLER-BENZ AKTIENGESELLSCHAFT, 70567 Stuttgart (DE)
(72) Erfinder: Köster, Rolf, Dipl.-Ing., D-76185 Karlsruhe (DE); Fisher, Jörg, Dipl.-Ing., D-73728 Esslingen (DE)

(56) Entgegenhaltungen:
- EP-A- 0 301 225
- EP-A- 0 372 218
- WO-A-94/00307
- DE-A- 4 222 922
- GB-A- 2 177 051

## Beschreibung

Die Erfindung betrifft ein Fahrzeug mit pneumatisch gefederter Doppelachse, deren Federaggregate in Abhängigkeit von der Abweichung einer Achse (Hauptachse) gegenüber einem Sollniveau mittels einer Steuerung belüftet, entlüftet bzw. nach außen abgesperrt werden.

Gemäß der DE 42 22 922 A1 wird bei Fahrzeugen mit pneumatisch gefederten Doppelachsen zur Steuerung der Luftfederaggregate in der Regel lediglich die Lage einer 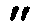 Hauptachse" der Doppelachse relativ zum Chassis des Fahrzeuges registriert, da bei Straßenfahrt davon ausgegangen werden kann, daß die jeweils andere Achse der Doppelachse im wesentlichen ein gleiches Niveau hat. Eventuelle Niveauunterschiede der beiden Achsen beruhen dabei typischerweise auf dynamischen Federhüben; im zeitlichen Mittel haben beide Achsen praktisch gleiches Niveau.

Außerhalb von Straßen und insbesondere von Baustellen können jedoch deutlich andere Verhältnisse vorliegen. Beispielsweise kann das Fahrzeug, etwa beim Beladen, auf einer Baustelle so abgestellt sein, daß das Chassis des Fahrzeuges relativ zur Hauptachse eine große Höhe und relativ zur anderen Achse der Doppelachse eine geringe Höhe einnimmt. Dies kann bildhaft als 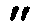 Treppenstufen-Situation" bezeichnet werden.

Wenn in diesem Falle lediglich das Niveau der Hauptachse relativ zum Chassis ermittelt wird, ergibt sich regelmäßig ein gegenüber dem normalen Sollniveau der Hauptachse erhöhtes Niveau, mit der Folge, daß die Steuerung der Luftfederaggregate den Bodenabstand des Fahrzeuges zu vermindern sucht, indem die Luftfederaggregate entlüftet werden. Im Extremfall tritt dabei überhaupt keine Absenkung des Fahrzeuges ein, weil bei einer extremen Treppenstufen-Situation die andere Achse der Doppelachse bereits ihre dem Chassis maximal angenäherte Endlage erreicht hat und an dafür vorgesehenen Gummipuffern od.dgl. anliegt. In jedem Falle wird bei dieser Steuerung der Bodendruck der Hauptachse stark vermindert. Da die Hauptachse aber typischerweise als - oftmals einzige - Antriebsachse des Fahrzeuges ausgebildet ist, wird damit gleichzeitig die Traktion der Antriebsräder übermäßig vermindert, mit der Folge, daß das Fahrzeug nicht ohne weiteres anfahren kann.

In einem solchen Falle müßte dann der Fahrer durch manuellen Eingriff in die Steuerung der Luftfederaggregate eine zusätzliche Belüftung der Luftfederaggregate bewirken, um die Traktion der Antriebsachse wieder zu erhöhen. Statt dessen ist es auch grundsätzlich möglich, die Niveaus beider Achsen einer Doppelachse zu ermitteln und mittels zusätzlicher Steuerventile zu bewirken, daß die Luftfederaggregate belüftet werden, wenn mindestens eine Achse der Doppelachse eine extrem an das Chassis angenäherte Lage hat.

Die Notwendigkeit eines manuellen Eingriffes in die Steuerung der Luftfederaggregate ist grundsätzlich unerwünscht und für den Fahrer zumindest unbequem. Die Erfassung der Niveaus beider Achsen einer Doppelachse sowie die Anordnung zusätzlicher Steuerventile für eine automatische Belüftung der Luftfederaggregate bei extremer Annäherung einer Achse an das Chassis verursacht einen unerwünscht hohen konstruktiven Aufwand.

Aus der WO 94/00307 ist ein luftgefedertes Fahrzeug bekannt, welcher 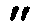 niederzuknieen" vermag. Damit kann beispielsweise ein Omnibus an Haltestellen das Ein- und Aussteigen der Fahrgäste deutlich erleichtern. Gemäß der vogenannten Druckschrift wird das beim 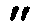 Niederknieen" eingestellte Niveau unverändert festgehalten, solange eine Tür geöffnet ist und/oder eine Haltebremse betätigt wird.

Die DE 35 22 851 C3 zeigt lediglich eine pneumatische Federung für ein Kraftfahrzeug, wobei der Bodenabstand durch manuelle Betätigung eines Steuerorganes erhöht werden kann. Sobald die Geschwindigkeit des Fahrzeuges einen vorgegebenen Wert überschreitet, wird der Bodenabstand automatisch auf den normalen Wert vermindert.

Aufgabe der Erfindung ist es, zur Beherrschung einer Treppenstufen-Situation eine zweckmäßige und preisgünstige Lösung aufzuzeigen.

Diese Aufgabe wird erfindungsgemäß dadurch gelöst, daß die Steuerung der Luftfederaggregate das Sollniveau - d.h. den Abstand zwischen Hauptachse und Chassis - auf einen vorgegebenen Sollwert erhöht, wenn bei einer Druckminderung in den Federaggregaten das Istniveau der Hauptachse im wesentlichen unverändert bleibt, d.h. insbesondere unverhältnismäßig wenig absinkt.

Dabei ist vorzugsweise vorgesehen, daß diese Erhöhung des Sollniveaus nur dann erfolgen kann, wenn das Fahrzeug steht oder mit allenfalls ganz geringer Geschwindigkeit fährt bzw. anfährt.

Die Erfindung beruht auf dem allgemeinen Gedanken, zur Erkennung einer Treppenstufen-Situation, bei der das Chassis relativ zur Hauptachse ein sehr hohes Niveau einnimmt, die Tatsache auszunutzen, daß bei der normalerweise aufgrund des hohen Niveaus des Chassis erfolgenden Entlüftung der Luftfederaggregate praktisch keine Niveauminderung eintreten kann und andererseits die ausbleibende Niveauminderung zusammen mit einer Druckminderung in den Luftfederaggregaten einen eindeutigen Hinweis auf die Treppenstufen-Situation darstellt. Damit kann dieses Kriterium zu einer zweckmäßigen Steuerung der Luftfederaggregate herangezogen werden.

Dabei ist vorteilhaft, daß keinerlei grundsätzliche Abänderungen der Steuerung vorgenommen werden müssen. Vielmehr braucht ein der Steuerung zugeordneter Rechner lediglich in der Lage zu sein, das angegebene Kriterium "zu erkennen".

Hinsichtlich bevorzugter Merkmale der Erfindung wird auf die Ansprüche sowie die nachfolgende Erläuterung eines Ausführungsbeispieles verwiesen, welches anhand der Zeichnung beschrieben wird.

Dabei zeigt
- Fig. 1: eine schematisierte Seitenansicht eines Fahrzeuges mit Doppelachse in einer Treppenstufen-Situation und
- Fig. 2: ein Flußdiagramm zur Erläuterung der Steuerung der Luftfederaggregate in einer solchen Treppenstufen-Situation.

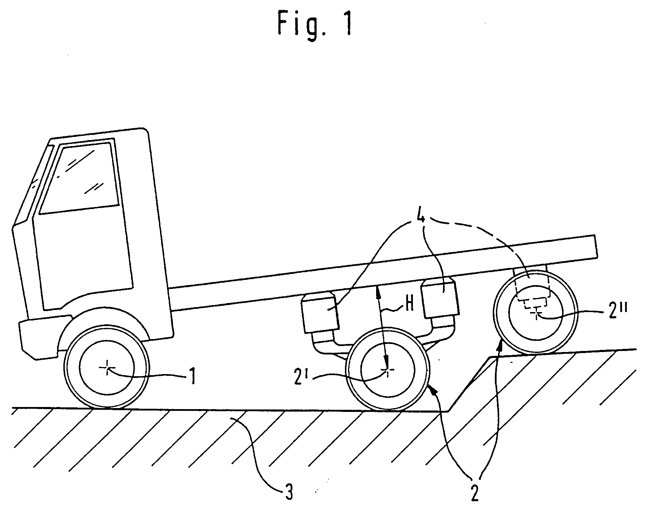

Das in Fig. 1 dargestellte Lastfahrzeug besitzt in grundsätzlich bekannter Weise eine beliebig gefederte Vorderachse 1 sowie eine pneumatisch gefederte hintere Doppelachse 2 mit einer angetriebenen Hauptsachse 2' und einer nicht angetriebenen Achse 2''. Dieses Fahrzeug möge sich nun gemäß der Darstellung der Fig. 1 in einer Treppenstufen-Situation befinden, derart, daß aufgrund extremer Unebenheiten des Untergrundes 3 das Chassis des Fahrzeuges relativ zur Hauptachse 2' ein sehr hohes und relativ zur nicht angetriebenen Achse 2'' ein extrem niedriges Niveau einnimmt, beispielsweise derart, daß die Achse 2'' bereits an chassisseitigen Gummipuffern od. dgl. anschlägt.

Das Fahrzeug besitzt eine - nicht dargestellte - automatische Niveausteuerung, welche die Luftfederaggregate 4 je nach Niveau des Fahrzeuges bzw. des Chassis relativ zur Hauptachse 2' belüftet, entlüftet oder nach außen absperrt. Dazu wird mittels eines nicht dargestellten Weggebers das Niveau H des Chassis relativ zur Hauptachse 2' ermittelt.

In der dargestellten Treppenstufen-Situation liegt der Istwert Hᵢₛₜ des Niveaus H deutlich oberhalb eines für normale Straßenfahrt bemessenen Sollwertes H_{soll, normal}. Ohne besondere Maßnahmen hätte dies zur Folge, daß die Steuerung die Luftfederaggregate 4 entlüftet, wodurch der Bodendruck und damit die Traktion der Hauptachse 2 stark vermindert würden. Dies kann zur Folge haben, daß ein in solcher Treppenstufen-Situation abgestelltes Fahrzeug nicht anzufahren vermag.

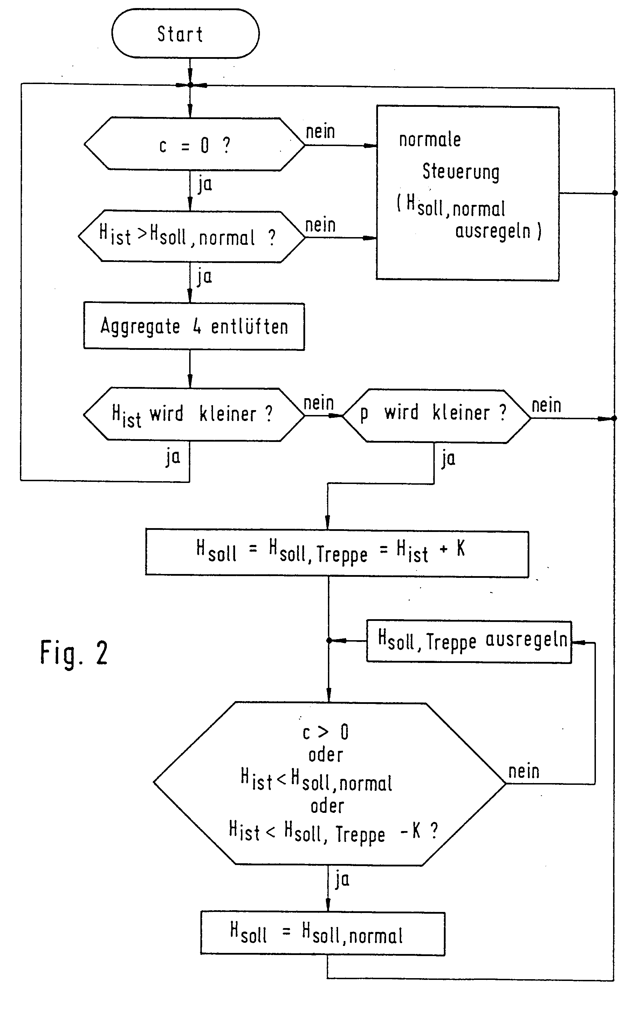

Erfindungsgemäß werden deshalb die Luftfederaggregate 4 in einer solchen Situation in besonderer Weise automatisch gesteuert. Die Fig. 2 zeigt dazu eine besonders bevorzugte Möglichkeit.

Nach dem Starten des Fahrzeuges wird zunächst die Fahrgeschwindigkeit c des Fahrzeuges abgefragt, etwa dadurch, daß ein Geschwindigkeitsgeber (Tachometer) ein die Geschwindigkeit wiedergebendes Signal an einen zugehörigen Eingang eines nicht dargestellten Rechners zur Überwachung der Steuerung der Luftfederaggregate 4 liefert. Falls die Fahrgeschwindigkeit nicht den Wert Null oder einen sehr geringfügigen Wert aufweist (d.h. wenn das Fahrzeug zumindest eine gewisse Fahrgeschwindigkeit hat), erfolgt keine besondere Steuerung der Luftfederaggregate 4, vielmehr können diese wie bei normaler Straßenfahrt gesteuert werden.

Wenn das Fahrzeug steht bzw. die Fahrgeschwindigkeit den Wert Null oder einen allenfalls ganz geringfügigen Wert aufweist, wird nachfolgend abgefragt, ob der Istwert Hᵢₛₜ des Niveaus H der Hauptsachse 2' oberhalb eines für normale Straßenfahrt bemessenen Sollwertes H_{soll, normal} liegt. Falls dies nicht der Fall ist, erfolgen keine besonderen Maßnahmen, vielmehr können die Luftfederaggregate 4 wie bei normaler Straßenfahrt gesteuert und gegebenenfalls belüftet werden.

Wenn jedoch Hᵢₛₜ größer als H_{soll, normal} ist, werden die Luftfederaggregate 4 zunächst entlüftet.

Dabei wird überprüft, ob sich der Istwert Hᵢₛₜ vermindert.

Sollte dies der Fall sein, werden die vorangehend beschriebenen Abfragen und Steuerungsmaßnahmen wiederholt.

Sollte sich jedoch der Istwert Hᵢₛₜ trotz Entlüftung der Federaggregate 4 nicht vermindern, kann noch zusätzlich abgefragt werden, ob sich der pneumatische Druck p in den Luftfederaggregaten 4 verkleinert. Sollte dies nicht der Fall sein, werden die vorbeschriebenen Abfragen und Maßnahmen wiederholt. Sollte sich der Druck p dagegen vermindern, wird der Steuerung ein neuer Sollwert H_{soll, Treppe} vorgegeben, welcher durch Summenbildung zwischen dem Istwert Hᵢₛₜ und einer vorgebbaren Konstante K gebildet wird. Dies ist gleichbedeutend damit, daß die Luftfederaggregate 4 zur Erreichung des neuen Sollwertes H_{soll, Treppe} belüftet werden.

Danach wird abgefragt, ob das Fahrzeug fährt oder nicht, d.h. ob die Fahrgeschwindigkeit c einen Wert hat, der größer als Null bzw. größer als ein vorgebbarer geringer Schwellwert der Fahrgeschwindigkeit ist.

Sollte die Fahrgeschwindigkeit c nicht größer als Null bzw. der geringe Schwellwert sein, werden die vorgenannten Abfragen und Steuerungsmaßnahmen wiederholt. Andernfalls wird zunächst der Sollwert Hₛₒₗₗ auf den Wert des normalen Sollwertes H_{soll, normal} gesetzt, bevor die vorgenannten Abfragen und Steuerungsmaßnahmen wiederholt werden.

Anstelle der Abfrage der Fahrgeschwindigkeit kann auch abgefragt werden, ob der Istwert Hᵢₛₜ geringer ist als der normale Sollwert H_{soll, normal}. Gegebenenenfalls kann auch abgefragt werden, ob der Istwert Hᵢₛₜ kleiner als der um die Konstante K verminderte Sollwert H_{soll, Treppe} ist. Falls dies der Fall ist, wird Hₛₒₗₗ auf den Wert Wert H_{soll, normal} eingestellt, bevor die beschriebenen Abfragen und Steuerungsmaßnahmen wiederholt werden.

Damit wird automatisch in einer Treppenstufen-Situation ein hinreichender Bodendruck der Hauptachse 2' gewährleistet.

Sollte eine der zuletzt angegebenen Abfragen das Ergebnis "nein" liefern, wird das Istniveau Hᵢₛₜ entsprechend dem Sollwert H_{soll, Treppe} ausgeregelt, da noch eine Treppenstufensituation vorliegt.

Für die dargestellte besondere Steuerung der Luftfederaggregate 4 ist keinerlei nennenswerter Aufwand notwendig, weil Signalgeber für die Fahrgeschwindigkeit (Tachometer) sowie Signalgeber für den pneumatischen Druck p in den Luftfederaggregaten 4 ohnehin regelmäßig zur Verfügung stehen und der Istwert Hᵢₛₜ des Fahrzeugniveaus im Bereich der Hauptachse 2' ebenfalls ständig ermittelt wird. Für die Erfindung ist es lediglich notwendig, daß die Steuerung diese Signale, etwa in der dargestellten Weise, verarbeiten und dabei veränderte Sollwerte H_{soll, Treppe} vorzugeben vermag.

Abweichend von den oben beschriebenen Maßnahmen kann alternativ auch vorgesehen sein, den pneumatischen Druck in den Federaggregaten 4 nach Erkennung einer Treppenstufen-Situation zunehmend zu erhöhen, bis die Räder der Hauptachse 2' eine hinreichende Traktion aufweisen. Hierfür können die Signale einer gegebenenfalls vorhandenen Anti-Schlupf-Regelung (ASR) der Antriebsräder der Hauptachse 2' ausgenutzt werden.

## Patentansprüche

1. Fahrzeug mit pneumatisch gefederter Doppelachse (2',2''), deren Federaggregate (4) in Abhängigkeit von der Abweichung einer Hauptachse (2') gegenüber einem Sollniveau (Hₛₒₗₗ) mittels einer Steuerung belüftet, entlüftet oder nach außen abgesperrt werden,
**dadurch gekennzeichnet,**
daß die Steuerung das Sollniveau (Hₛₒₗₗ) auf einen vorgegebenen Sollwert (H_{soll, treppe}) erhöht, wenn bei einer Druckminderung in den Federaggregaten (4) das Istniveau (Hᵢₛₜ) der Hauptachse (2') im wesentlichen unverändert bleibt.

2. Fahrzeug nach Anspruch 1,
**dadurch gekennzeichnet,**
daß der höhere vorgegebene Sollwert (H_{soll, Treppe}) für das Sollniveau (Hₛₒₗₗ) bei fahrendem Fahrzeug wieder auf normales Sollniveau (H_{soll, normal}) oder auf ein früher vorgegebenes Sollniveau vermindert wird.

3. Fahrzeug nach Anspruch 1 oder 2,
**dadurch gekennzeichnet,**
daß der höhere vorgegebene Sollwert (H_{soll, Treppe}) vermindert wird, wenn das Istniveau (Hᵢₛₜ) geringer als ein früher vorgegebenes Sollniveau oder normales Sollniveau (H_{soll, normal}) ist.

4. Fahrzeug nach einem der Ansprüche 1 bis 3,
**dadurch gekennzeichnet,**
daß das normale Sollniveau (H_{soll, normal}) vorgegeben wird, sobald die Fahrgeschwindigkeit (c) des Fahrzeuges oberhalb eines vorgegebenen Wertes sehr geringer Größe liegt.

## Claims

1. Vehicle with a tandem axle system (**2'**, **2''**) having pneumatic suspension, whose suspension aggregates (**4**) are pressurized, vented, or isolated from the outside by a control system, depending on the deviation of a main axle (**2'**) compared with a set level (**H**_{**nom**}),
**characterized in that**
the control system increases the set level (**H**_{**nom**}) to a pre-determined nominal value (**H**_{**nom, stair**}) when the actual level (**H**_{**act**}) of the main axle (**2'**) remains essentially unchanged in the event of a pressure reduction in the suspension aggregates (**4**).

2. Vehicle according to Claim 1,
**characterized in that**
when the vehicle is in motion, the said increased pre-determined nominal value (**H**_{**nom, stair**}) of the set level (**H**_{**nom**}) is reduced to the normal nominal level (**H**_{**nom, normal**}) or to a nominal level pre-set earlier.

3. Vehicle according to Claims 1 or 2,
**characterized in that**
the said increased pre-set value (**H**_{**nom, stair**}) is reduced when the actual level (**H**_{**act**}) is lower than a nominal level pre-set earlier or than the normal nominal level (**H**_{**nom, normal**}).

4. Vehicle according to any of Claims 1 to 3,
**characterized in that**
the normal nominal level (**H**_{**nom, normal**}) is pre-set, as soon as the driving speed (c) of the vehicle is above a pre-established very small value.

## Revendications

1. Véhicule à essieu double (2', 2'') à suspension pneumatique, dont les groupes de suspension (4) sont alimentés en air, purgées ou fermées vis à vis de l'extérieur au moyen d'une commande en fonction de l'écart d'un essieu principal (2') par rapport à un niveau de consigne (H_{cons}),
caractérisé
en ce que la commande élève le niveau de consigne (H_{cons}) à une valeur de consigne prescrite (H_{cons, dénivellation}) lorsque le niveau réel (H_{réel}) de l'essieu principal (2') demeure sensiblement inchangé lors d'une réduction de pression dans les groupes de suspension (4).

2. Véhicule selon la revendication 1,
caractérisé
en ce que la valeur de consigne prescrite supérieure (H_{cons, dénivellation}) du niveau de consigne (H_{cons}) est à nouveau réduite au niveau normal de consigne (H_{cons, normal}) ou à un niveau de consigne antérieurement prescrit lorsque le véhicule est en marche.

3. Véhicule selon la revendication 1 ou 2,
caractérisé
en ce que la valeur de consigne prescrite supérieure (H_{cons, dénivellation}) est réduite lorsque le niveau réel (H_{réel}) est inférieur à un niveau de consigne antérieurement prescrit ou à un niveau de consigne normal (H_{cons, normal}).

4. Véhicule selon l'une des revendications 1 à 3,
caractérisé
en ce que le niveau normal de consigne (H_{cons, normal}) est prescrit dès que la vitesse de marche (c) du véhicule est supérieure à une valeur prescrite de très faible grandeur.
